# EUROPÄISCHE PATENTSCHRIFT

(11) **EP 0 939 551 B1**
(45) Veröffentlichungstag und Bekanntmachung des Hinweises auf die Patenterteilung: **11.04.2007**
(21) Anmeldenummer: 99200442.4
(22) Anmeldetag: 17.02.1999
(51) Int. Cl.: H04N 7/084, H04N 5/44, H04N 5/265

(54) **Anordnung zum Bearbeiten von Videosignalen**
Apparatus for processing video signals
Dispositif de traitement de signaux vidéo

(30) Priorität: 26.02.1998 DE 19808005
(43) Veröffentlichungstag der Anmeldung: 01.09.1999
(73) Patentinhaber: BTS Holding International B.V., 4827 HG Breda (NL)
(72) Erfinder: Grzibek, Rolf, Röntgenstrasse 24, 22335 Hamburg (DE)
(74) Vertreter: Lindemann, Robert

(56) Entgegenhaltungen:
- DE-A- 4 201 335
- US-A- 5 021 772
- US-A- 5 257 348

## Beschreibung

Die Erfindung betrifft eine Anordnung zum Bearbeiten von Videosignalen, welche als im Zeilensprungverfahren generierte interlaced Videosignale, bei denen zwei Teilbilder ein Vollbild bilden, und/oder als pseudo-interlaced Videosignale vorliegen, welche aus durch progressive Abtastung entstandenen non-interlaced Videosignalen abgeleitet sind.

Nach dem Stande der Technik bekannte Anordnungen zum Bearbeiten von Videosignalen, beispielsweise zum Mischen von Videosignalen, sind entweder für im sogenannten Zeilensprungverfahren generierte Videosignale oder für durch progressive Abtastung entstandene Videosignale ausgelegt. Innerhalb einer Anordnung können mehrere Schaltungen vorgesehen sein, von denen jede einzelne jedoch entweder nur für im Zeilensprungverfahren generierte Videosignale oder für durch progressive Abtastung entstandene Videosignale ausgelegt sind. Sollen also derartige Anordnungen für beide Arten von Videosignalen geeignet sein, entsteht ein beträchtlicher Schaltungsaufwand.

Das Dokument DE 42 01 335 A1 offenbart ein Verfahren und eine Anordnung zum Mischen eines Zwischenzeilen-Videosignals mit einem Progressiv-Videosignal.

Im sogenannten Zeilensprungverfahren generierte Videosignale werden international als "interlaced" bezeichnet. Bei derartigen Signalen bilden zwei Teilbilder gemeinsam ein Vollbild. Die Teilbilder sind derart generiert, daß sie zeitlich nacheinander übertragen werden und bei der Wiedergabe Zeile für Zeile ineinander verkämmt im sogenannten Zeilensprungverfahren wiedergegeben werden. Dabei kann der Bildinhalt der beiden Teilbilder verschiedene Bewegungsphasen eines darzustellenden Objektes darstellen. Durch progressive Abtastung entstandene Vidoesignale werden international als "non-interlaced" bezeichnet. Bei diesen Signalen werden alle Bildzeilen eines Bildes in kontinuierlicher aufeinanderfolgender Reihenfolge generiert. Es gibt keine ineinander verkämmten Halbbilder.

Es ist bekannt, non-interlaced Videosignale in solche Videosignale umzuwandeln, bei denen ein ursprünglich nach dieser Abtastnorm abgetastetes Bild in zwei Teilbilder zerlegt wird. Es handelt sich hierbei nicht eigentlich um Teilbilder, wie sie bei interlaced Videosignalen vorliegen, sondern um ein zerlegtes non-interlaced Vollbild. Diese Bilder werden nachfolgend als pseudo-interlaced bezeichnet, da sie in elektronischen Anordnungen ähnlich wie Teilbilder eines interlaced Videosignals übertragen werden können. Zu beachten ist jedoch, daß derartige Teilbilder eines pseudo-interlaced Videosignals in gleicher Weise bearbeitet werden müssen.

Es ist Aufgabe der Erfindung, eine Anordnung der eingangs genannten Art zum Bearbeiten von Videosignalen anzugeben, welche mit möglichst geringem Schaltungsaufwand sowohl die Bearbeitung von interlaced Videosignalen wie auch von non-interlaced bzw. pseudo-interlaced Videosignalen gestattet.

Diese Aufgabe ist erfindungsgemäß dadurch gelöst, daß wenigstens eine Videosignalverarbeitungseinheit vorgesehen ist, welcher wenigstens ein interlaced Videosignal oder wenigstens ein pseudo-interlaced Videosignal zugeführt wird und welche diese Videosignale in Abhängigkeit von mittels einer Steuerung erzeugten Steuerdaten bearbeitet, und daß ein Taktgeber vorgesehen ist, welcher die Steuerung und/oder die Videosignalverarbeitungseinheit derart steuert, daß bei einer Verarbeitung eines interlaced Videosignals gegebenenfalls neue Steuerdaten ab Beginn dessen nächsten Teilbildes und bei einer Verarbeitung eines pseudo-interlaced Videosignals ab Beginn dessen nächsten Vollbildes erzeugt und/oder berücksichtigt werden.

Die Videosignalverarbeitungseinheit nimmt die Bearbeitung der Videosignale vor. Dieser kann entweder ein konventionelles interlaced Videosignal oder ein pseudo-interlaced Videosignal zugeführt werden, welches durch Zerlegung der Bilder eines non-interlaced Videosignals in zwei Pseudo-Teilbilder entstanden ist.

Zwei Teilbilder eines Vollbildes eines interlaced Videosignals können in verschiedener Weise bearbeitet werden. So können beispielsweise die beiden Teilbilder einem sich kontinuierlich verändernden Mischvorgang unterzogen werden, da die beiden Teilbilder bei der Wiedergabe zeitlich nacheinander dargestellt werden. Für ein non-interlaced bzw. pseudo-interlaced Videosignal ist dies jedoch nicht zulässig, da die beiden erzeugten Pseudo-Teilbilder eines pseudo-interlaced Videosignals zu einem Bild gehören und die gleiche Bewegungsphase des Bildinhaltes wiedergeben. Würden die beiden Pseudo-Teilbilder in verschiedener Weise bearbeitet, würde dies bei Darstellung des non-interlaced Videosignals als Störung im Bild auffallen.

Daher wird erfindungsgemäß die Steuerung, die die Videosignalverarbeitung mittels Steuerdaten steuert, mittels eines Taktgebers ihrerseits so gesteuert, daß die Verarbeitung von Teilbildern eines interlaced Videosignals und von Pseudo-Teilbildern eines pseudo-interlaced Videosignals in unterschiedlicher Weise geschieht.

Bei Verarbeitung eines interlaced Videosignals steuert der Taktgeber die Steuerung bzw. die Videosignalverarbeitungseinheit derart, daß bei Beginn jedes neuen Teilbildes gegebenenfalls geänderte Steuerdaten erzeugt werden bzw. durch die Videosignalverarbeitungseinheit berücksichtigt werden. Dies bedeutet, daß mit Beginn jeden neuen Teilbildes gegebenenfalls die Verarbeitungsweise der Teilbilder geändert wird. Dies ist wie oben erläutert wurde, bei Teilbildern eines interlaced Videosignals zulässig.

Wird durch die Videosignalverarbeitungseinheit jedoch ein pseudo-interlaced Videosignal verarbeitet, so ist dies nicht zulässig. In diesem Falle steuert der Taktgeber die Steuerung bzw. die Videosignalverarbeitungseinheit derart, daß nur ab Beginn eines neuen Vollbildes, d.h. also des ersten Pseudo-Teilbildes eines Vollbildes, eine neue, veränderte Art der Bearbeitung durch die Videosignalverarbeitungseinheit vorgenommen wird. Damit ist sichergestellt, daß zwei aufeinanderfolgende Pseudo-Teilbilder eines pseudo-interlaced Videosignals, die zu einem gleichen Vollbild eines non-interlaced Videosignals gehören, in gleicher Weise verarbeitet werden, so daß innerhalb dieses Bildes keine Bildstörungen sichtbar werden.

Im Ergebnis ist diese Anordnung in der Lage, sowohl interlaced Videosignale wie auch aus non-interlaced Videosignalen hervorgegangene pseudo-interlaced Videosignale zu verarbeiten. Abhängig davon, welche Art von Videosignal vorliegt, wird die Steuerung bzw. die Videosignalverarbeitungseinheit derart gesteuert, daß angepaßt an die Art des Videosignals eine optimale Bearbeitung stattfindet. Es ist auf diese Weise nur eine Videosignalverarbeitungseinheit für beide Arten von Videosignalen erforderlich.

Für eine Ausgestaltung der Erfindung gemäß Anspruch 2 ist ein Zwischenspeicher vorgesehen, welcher die von der Steuerung gelieferten Steuerdaten übernimmt. Die Videosignalverarbeitungseinheit ihrerseits übernimmt die Steuerdaten unmittelbar aus dem Zwischenspeicher und nimmt eine Bearbeitung der Videosignale in Abhängigkeit dieser Steuerdaten vor. Dabei kann in diesem Falle die Videosignalverarbeitungseinheit so ausgelegt sein, daß sie eine Änderung der Steuerdaten sofort berücksichtigt, unabhängig davon, welches Teilbild als nächstes bearbeitet wird.

Um die oben erläuterte unterschiedliche Verarbeitung der beiden Typen von Videosignalen dennoch sicherzustellen, wird der Zwischenspeicher durch den Taktgeber so angesteuert, daß bei einer Verarbeitung eines interlaced Videosignals bei Beginn jedes neuen Teilbildes neue Steuerdaten in den Zwischenspeicher übernommen werden können. Bei einer Verarbeitung eines pseudo-interlaced Videosignals wird der Zwischenspeicher mittels des Taktgebers jedoch so angesteuert, daß gegebenenfalls durch die Steuerung erzeugte neue Steuerdaten nur zu Beginn des nächsten Vollbildes, also des ersten Pseudo-Teilbildes eines pseudo-interlaced Videosignals, in den Zwischenspeicher übernommen werden.

Alternativ zu der Lösung gemäß Anspruch 2 sieht eine weitere Ausgestaltung der Erfindung gemäß Anspruch 3 vor, daß bereits die Steuerung so ausgelegt ist, daß sie Daten nur zu den jeweils zulässigen Zeiten liefert. In diesem Falle ist der oben erläuterte Zwischenspeicher nicht erforderlich, kann aber aus praktischen Erwägungen dennoch vorgesehen sein.

Die Information darüber, welches Teilbild eines zu verarbeitenden Videosignals vorliegt, kann der Taktgeber, wie gemäß einer weiteren Ausgestaltung nach Anspruch 4 vorgesehen ist, vorteilhaft mittels eines extern erzeugten Genlock-Signals erhalten, das in professionellen Videoverarbeitungsanordnungen ohnehin vorgesehen ist.

Gemäß einer weiteren Ausgestaltung nach Anspruch 5 kann die Signalverarbeitungseinheit vorteilhaft auch zum Mischen mehrerer Videosignale eingesetzt werden.

Gegebenenfalls besteht der Wunsch, verarbeitete non-interlaced Videosignale und verarbeitete interlaced Videosignale getrennt weiterzuverarbeiten, da diese Signale beispielsweise auf verschiedenen Übertragungswegen weiter zu übertragen sind. Für diesen Fall sind gemäß Anspruch 6 wenigstens zwei Videosignalverarbeitungseinheiten vorgesehen, welche jeweils nur zugeordnete Videosignale verarbeiten, die getrennt weiter verarbeitet werden können. Auf diese Weise können beispielsweise für eine Sendung generierte Bilder parallel in interlaced bzw. non-interlaced Format bearbeitet werden. Die Bearbeitung der beiden Signalzüge kann auf die gleiche Weise geschehen, so daß die Bilder den gleichen Bearbeitungsprozessoren unterzogen werden.

Liegt ein zu verarbeitendes non-interlaced Videosignal nicht bereits in pseudo-interlaced Form vor, so sind die nach Anspruch 7 vorgesehenen Umformungsmittel geeignet, dieses Videosignal in das pseudo-interlaced Format umzuwandeln. Umgekehrt können die nach Anspruch 8 vorgesehenen Rückumformungsmittel vorteilhaft dazu eingesetzt werden, ein in der Anordnung verarbeitetes pseudo-interlaced Videosignal in ein non-interlaced Videosignal rückzuwandeln.

Nachfolgend werden anhand der Zeichnung zwei Ausführungsbeispiele der Erfindung näher erläutert. Es zeigen:
Fig. 1 ein Blockschaltbild einer ersten Ausführungsform der erfindungsgemäßen Anordnung zum Bearbeiten von Videosignalen, bei der ein von einem Taktgeber angesteuerter Zwischenspeicher vorgesehen ist, und
Fig. 2 ein Blockschaltbild einer zweiten Ausführungsform der erfindungsgemäßen Anordnung, bei der der Taktgeber eine Steuerung der Videosignalverarbeitungseinheit ansteuert.

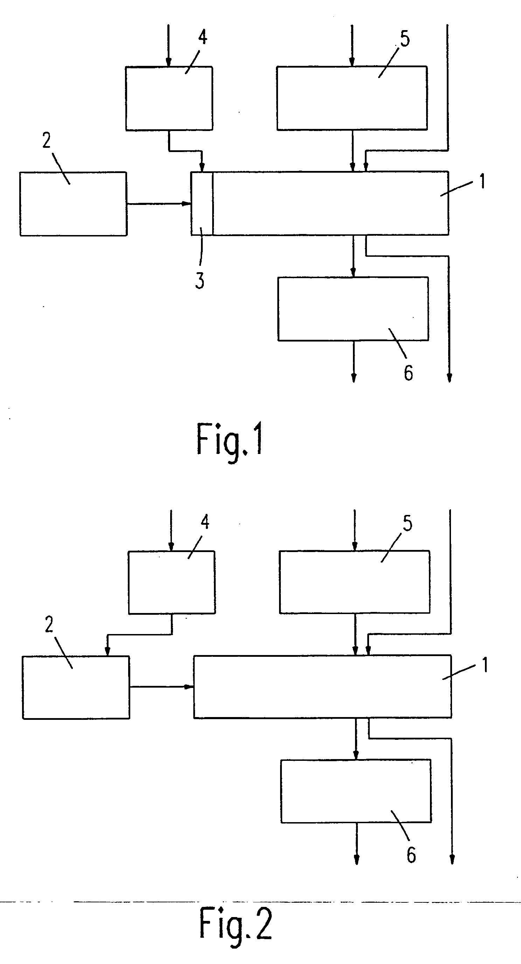

Das in Fig. 1 dargestellte Blockschaltbild der ersten Ausführungsform der Anordnung zum Bearbeiten von Videosignalen zeigt eine Videosignalverarbeitungseinheit 1. Die Videosignalverarbeitungseinheit 1 dient dazu, ihr zugeführte Videosignale zu bearbeiten, beispielsweise zu mischen oder in anderer Weise zu verändern.

Die Videosignalverarbeitungseinheit 1 nimmt diese Bearbeitung von Videosignalen in Abhängigkeit von Steuerdaten vor, welche mittels einer Steuerung 2 erzeugt werden. Die Steuerung 2 liefert diese Steuerdaten an einen Zwischenspeicher 3. Die Videosignalverabeitungseinheit 1 ihrerseits übernimmt die Steuerdaten zeitlich unverzögert aus dem Zwischenspeicher 3 und nimmt die Art der Videosignalverarbeitung in Abhängigkeit dieser Steuerdaten vor. Dies geschieht gegebenenfalls ohne nennenswerte Verzögerung, d.h. also bei sich ändernden Steuerdaten wird auch eine entsprechend veränderte Bearbeitung der Videosignale vorgenommen.

Der Zwischenspeicher 3 wird mittels eines Taktgebers 4 angesteuert, dem wiederum ein extern erzeugtes Genlock-Signal zugeführt wird. Der Taktgeber 4 steuert den Zwischenspeicher so an, daß in diesen nur dann neue Steuerdaten übernommen werden, wenn dies in Abhängigkeit des Videosignals erwünscht ist. So werden bei einer Verarbeitung eines interlaced-Videosignals gegebenenfalls neue Steuerdaten jeweils zu Beginn eines neuen Teilbildes in den Zwischenspeicher übernommen. Wird jedoch ein pseudo-interlaced Videosignal verarbeitet, so wird der Zwischenspeicher mittels des Taktgebers 4 so angesteuert, daß neue Steuerdaten nur zu Beginn eines neuen Vollbildes, also zu Beginn des jeweils ersten Pseudo-Teilbildes eines pseudo-interlaced Videosignals übernommen werden.

Damit wird erreicht, daß bei in non-interlaced bzw. in pseudo-interlaced Form vorliegenden Videosignalen eine Veränderung der Bearbeitung nur zu Beginn eines jeweils neuen Vollbildes vorgenommen wird und daher alle Pseudo-Teilbilder des pseudo-interlaced Videosignals in gleicher Weise bearbeitet werden.

Der Videosignalverarbeitungseinheit 1 kann ein non-interlaced Videosignal unmittelbar zugeführt werden. Auch ein bereits in die pseudo-interlaced Form umgewandeltes non-interlaced Videosignal kann dieser unmittelbar zugeführt werden. Ein noch in der ursprünglichen Form vorliegendes non-interlaced Videosignal, das durch progressive Abtastung entstanden ist, wird mittels optional vorgesehenen Umformungsmitteln 5 in ein pseudo-interlaced Videosignal umgewandelt. Dabei wird ein Vollbild eines derartigen non-interlaced Videosignals in zwei Pseudo-Teilbilder zerlegt, welche in ähnlicher Weise verarbeitet werden können wie die Teilbilder eines non-interlaced Videosignals. Jedoch ist bei derartigen Pseudo-Teilbildern zu beachten, daß diese in gleicher Weise verarbeitet werden.

Abhängig davon, welche Arten von Signalen mittels der Videosignalverarbeitungseinheit 1 verarbeitet wurden, werden diese in gleicher Form wieder ausgegeben. Sollen gegebenenfalls verarbeitete pseudo-interlaced Videosignale wieder in non-interlaced Videosignale umgewandelt werden, sind optional Rückumformungsmittel 6 vorzusehen, welche diese Umwandlung vornehmen.

Eine in Fig. 2 ebenfalls in Form eines Blockschaltbildes dargestellte zweite Ausführungsform der erfindungsgemäßen Anordnung ist entsprechend der ersten Ausführungsform gemäß Fig. 1 aufgebaut, jedoch ist dort der Zwischenspeicher 3 nicht vorgesehen. Ferner steuert der Taktgeber 4 unmittelbar die Steuerung 2 an.

Bei dieser Ausführungsform wird die Steuerung 2 mittels des Taktgebers 4 so gesteuert, daß sie ihrerseits neue, veränderte Steuerarten bei Verarbeitung eines interlaced Videosignals nur zu Beginn jedes neuen Teilbildes und bei Verarbeitung eines pseudo-interlaced Videosignals nur zu Beginn eines neuen Vollbildes, also zu Beginn des ersten Pseudo-Teilbildes eines pseudo-interlaced Videosignals, ausgibt. Auch auf diese Weise ist sichergestellt, daß neue veränderte Steuerdaten mittels der Videosignalverarbeitungseinheit 1 nur ab den jeweils gewünschten Zeitpunkten berücksichtigt werden.

Bei beiden Ausführungsformen der erfindungsgemäßen Anordnung ist sichergestellt, daß zwei Pseudo-Teilbilder eines Vollbildes eines pseudo-interlaced Videosignals in gleicher Weise bearbeitet werden. Wird dieses Signal in ein konventionelles non-interlaced Videosignal rückumgewandelt, ist sichergestellt, daß alle Bildzeilen des Vollbildes in gleicher Weise bearbeitet wurden. Dies ist wichtig, da diese Zeile eines Vollbildes identische Bewegungsphasen wiedergeben. Bei Verarbeitung eines non-interlaced Videosignals hingegen können zwei Teilbildes eines Vollbildes gewünschtenfalls in verschiedener Weise bearbeitet werden, da sie zeitlich nacheinander dargestellt werden und verschiedene Bewegungsphasen wiedergeben. Diese Differenzierung der Bearbeitung der Videosignale gelingt mittels der erfindungsgemäßen Anordnung mit geringem Schaltungsaufwand. Ferner ist eine derartige Anordnung sehr flexibel für verschiedenartige Videosignale einsetzbar.

## Patentansprüche

1. Anordnung zum Bearbeiten von Videosignalen, welche als im Zeilensprungverfahren generierte interlaced Videosignale, bei denen zwei Teilbilder ein Vollbild bilden, und/oder als pseudo-interlaced Videosignale vorliegen, welche aus durch progressive Abtastung entstandenen non-interlaced Videosignalen abgeleitet sind, **dadurch gekennzeichnet,**
**daß** wenigstens eine Videosignalverarbeitungseinheit (1) vorgesehen ist, welcher wenigstens ein interlaced Videosignal oder wenigstens ein pseudo-interlaced Videosignal zugeführt wird und welche diese Videosignale in Abhängigkeit von mittels einer Steuerung (2) erzeugten Steuerdaten bearbeitet, und daß ein Taktgeber (4) vorgesehen ist, welcher die Steuerung (2) und/oder die Videosignalverarbeitungseinheit (1) derart steuert, daß bei einer Verarbeitung eines interlaced Videosignals gegebenenfalls neue Steuerdaten ab Beginn dessen nächsten Teilbildes und bei einer Verarbeitung eines pseudo-interlaced Videosignals ab Beginn dessen nächsten Vollbildes erzeugt und/oder berücksichtigt werden.

2. Anordnung nach Anspruch 1, **dadurch gekennzeichnet,**
**daß** ein Zwischenspeicher (3) für die Steuerdaten vorgesehen ist, von welchem die Videosignalverarbeitungseinheit (1) die Steuerdaten unmittelbar übernimmt und einsetzt und welcher von dem Taktgeber (4) so angesteuert wird, daß in ihn bei einer Verarbeitung eines interlaced Videosignals zu Beginn dessen nächsten Teilbildes und bei einer Verarbeitung eines pseudo-interlaced Videosignals zu Beginn dessen nächsten Vollbildes neue Steuerdaten übernommen werden.

3. Anordnung nach Anspruch 1, **dadurch gekennzeichnet,**
**daß** der Taktgeber (4) die Steuerung (2) derart steuert, daß diese bei einer Verarbeitung eines interlaced Videosignals zu Beginn dessen nächsten Teilbildes und bei einer Verarbeitung eines pseudo-interlaced Videosignals zu Beginn dessen nächsten Vollbildes neue Steuerdaten an die Videosignalverarbeitungseinheit liefert.

4. Anordnung nach Anspruch 1, **dadurch gekennzeichnet,**
**daß** der Taktgeber (4) mittels eines Genlock-Signals, das Informationen über die Synchronisationssignale des zu verarbeitenden Videosignals enthält, angesteuert wird.

5. Anordnung nach Anspruch 1, **dadurch gekennzeichnet,**
**daß** die Signalverarbeitungseinheit (1) zum Mischen wenigstens zweier Videosignale vorgesehen ist.

6. Anordnung nach Anspruch 1, **dadurch gekennzeichnet,**
**daß** zwei Videosignalverarbeitungseinheiten (1) vorgesehen sind, von denen eine erste zur Berarbeitung eines oder mehrerer interlaced Videosignale und eine zweite zur Bearbeitung eines oder mehrerer pseudo-interlaced Videosignale vorgesehen ist.

7. Anordnung nach Anspruch 1, **dadurch gekennzeichnet,**
**daß** Umformungsmittel (5) zum Umwandeln von non-interlaced Videosignalen in pseudo-interlaced Videosignale vorgesehen sind, welche eine Bildzeilen und Synchronisationsimpuls-Struktur aufweisen, welche einem interlaced Signale ähnelt und eine Verarbeitung dieser Signale in der Signalverarbeitungseinheit erlaubt.

8. Anordnung nach Anspruch 1, **dadurch gekennzeichnet,**
**daß** Rückumformungsmittel (6) vorgesehen sind, welche von der Signalverarbeitungseinheit ausgegebene pseudo-interlaced Signale in non-interlaced Videosignale umwandeln und als solche ausgeben.

## Claims

1. An arrangement for processing video signals provided as interlaced video signals generated in the interlaced scanning mode, in which two fields constitute one frame, and/or as pseudo-interlaced video signals derived from non-interlaced video signals obtained by means of progressive scanning, **characterized in that** at least one video signal-processing unit (1) is provided which receives at least an interlaced video signal or at least a pseudo-interlaced video signal and processes these video signals in dependence upon control data generated by means of a control unit (2), and **in that** a clock generator (4) is provided which controls the control unit (2) and/or the video signal-processing unit (1) in such a way that, when processing an interlaced video signal or a pseudo-interlaced video signal, new control data, as necessary, are generated and/or taken into account as from the start of its next field or its next frame, respectively,

2. An arrangement as claimed in claim 1, **characterized in that** a buffer memory (3) is provided for the control data, from which buffer memory the video signal-processing unit (1) directly takes over and employs the control data and which is controlled by the clock generator (4) in such a way that it takes over new control data when processing an interlaced video signal or a pseudo-interlaced video signal at the start of its next field or its next frame, respectively.

3. An arrangement as claimed in claim 1, **characterized in that** the clock generator (4) controls the control unit (2) in such a way that it supplies new control data to the video signal-processing unit when processing an interlaced video signal or a pseudo-interlaced video signal at the start of its next field or its next frame, respectively.

4. An arrangement as claimed in claim 1, **characterized in that** the clock generator (4) is controlled by means of a genlock signal which comprises information about the synchronizing signals of the video signal to be processed.

5. An arrangement as claimed in claim 1, **characterized in that** the video signal-processing unit (1) is provided to mix at least two video signals.

6. An arrangement as claimed in claim 1, **characterized in that** two video signal-processing units (1) are provided, a first of which is provided to process one or more interlaced video signals and a second of which is provided to process one or more pseudo-interlaced video signals.

7. An arrangement as claimed in claim 1, **characterized in that** conversion means (5) are provided for converting non-interlaced video signals into pseudo-intarlaced video signals having a scanning line and sync pulse structure which is similar to that of interlaced signals and allows said signals to be processed in the video signal-processing unit.

8. An arrangement as claimed in claim 1, **characterized in that** reconversion means (6) are provided which convert pseudo-interlaced signals supplied by the video signal-processing unit into non-interlaced video signals and output them as such.

## Revendications

1. Dispositif de traitement de signaux vidéo, lesquels existent en tant que signaux vidéo entrelacés générés dans un procédé d'entrelacement, dans lesquels deux images partielles forment une image totale, et/ou en tant que signaux vidéo pseudo-entrelacés, lesquels dérivés de signaux vidéo non-entrelacés créés par un balayage progressif, **caractérisé en ce**
**qu'**au moins une unité de traitement de signaux vidéo (1) est prévue, vers laquelle au moins un signal vidéo entrelacé ou au moins un signal vidéo pseudo-entrelacé est acheminé, et laquelle traite ces signaux vidéo en fonction de données de commande générées au moyen d'une commande (2), et en ce qu'une horloge (4) est prévue, laquelle commande la commande (2) et/ou l'unité de traitement de signaux vidéo (1) de sorte que lors d'un traitement d'un signal vidéo entrelacé, le cas échéant, de nouvelles données de commande sont créées et/ou prises en compte au début de son image partielle suivante, et lors d'un traitement d'un signal vidéo pseudo-entrelacé au début de son image totale suivante.

2. Dispositif selon la revendication 1, **caractérisé en ce**
**qu'**une mémoire tampon (3) est prévue pour les données de commande, à partir de laquelle l'unité de traitement de signaux vidéo (1) prend immédiatement en charge et utilise les données de commande et laquelle est commandée par l'horloge (4) de sorte que de nouvelles données de commande sont prises en charge dans celle-ci lors d'un traitement d'un signal vidéo entrelacé au début de son image partielle suivante et lors d'un traitement d'un signal vidéo pseudo-entrelacé au début de son image totale suivante.

3. Dispositif selon la revendication 1, **caractérisé en ce que**
l'horloge (4) commande la commande (2) de sorte que celle-ci fournit de nouvelles données de commande à l'unité de traitement de signaux vidéo lors d'un traitement d'un signal vidéo entrelacé au début de son image partielle suivante et lors d'un traitement d'un signal vidéo pseudo-entrelacé au début de son image totale suivante.

4. Dispositif selon la revendication 1, **caractérisé en ce que**
l'horloge (4) est commandée au moyen d'un signal Genlock qui contient des informations sur les signaux de synchronisation du signal vidéo à traiter.

5. Dispositif selon la revendication 1, **caractérisé en ce que**
l'unité de traitement de signaux (1) est prévue pour le mélange d'au moins deux signaux vidéo.

6. Dispositif selon la revendication 1, **caractérisé en ce que**
deux unités de traitement de signaux vidéo (1) sont prévues, dont une première est prévue pour le traitement d'un ou de plusieurs signaux vidéo entrelacés et une seconde est prévue pour le traitement d'un ou de plusieurs signaux vidéo pseudo-entrelacés.

7. Dispositif selon la revendication 1, **caractérisé en ce que**
des moyens de transformation (5) sont prévus pour la transformation de signaux vidéo non-entrelacés en signaux vidéo pseudo-entrelacés qui présentent une structure de lignes d'image et d'impulsion de synchronisation, laquelle ressemble à un signal entrelacé et permet un traitement de ces signaux dans l'unité de traitement de signaux.

8. Dispositif selon la revendication 1, **caractérisé en ce que**
des moyens de retransformation (6) sont prévus, lesquels transforment des signaux pseudo-entrelacés émis par l'unité de traitement de signaux en signaux vidéo non-entrelacés et émettent ceux-ci en tant que tels.
